Europäisches Patentamt

European Patent Office

Office européen des brevets

(19)

(11) Veröffentlichungsnummer: **0 353 544**
**A1**

# (12) EUROPÄISCHE PATENTANMELDUNG

(21) Anmeldenummer: 89113242.5

(22) Anmeldetag: 19.07.89

(51) Int. Cl.4: **C09C 1/00 , C09D 11/02 , B41M 3/14**

(30) Priorität: 28.07.88 DE 3825702

(43) Veröffentlichungstag der Anmeldung:
07.02.90 Patentblatt 90/06

(84) Benannte Vertragsstaaten:
AT BE CH DE ES FR GB GR IT LI LU NL SE

(71) Anmelder: MICHAEL HUBER MÜNCHEN GMBH FARBENFABRIKEN
Feldkirchner Strasse 15
D-8011 Kirchheim-Heimstetten(DE)

Anmelder: Degussa AG
Wolfgang Rodenbacher Chaussee 4
D-6450 Hanau 1(DE)

(72) Erfinder: Hild, Wilhelm, Dr.
Parkweg 3
D-8011 Poing(DE)
Erfinder: Zimmer, Reiner, Dr.
Watzmannstrasse 11
D-8011 Poing(DE)
Erfinder: Dorbath, Bernd, Dr.
Kastanienweg 5
D-8755 Alzenau(DE)
Erfinder: Gwinner, Dieter, Dr.
Vosswaldestrasse 7
D-6450 Hanau 9(DE)

(74) Vertreter: Brauns, Hans-Adolf, Dr. rer. nat. et al
Hoffmann, Eitle & Partner, Patentanwälte
Arabellastrasse 4
D-8000 Munich 81(DE)

(54) Goniochromatische Pigmente, Verfahren zu deren Herstellung und deren Verwendung zur Herstellung von Druckfarben.

(57) Die Erfindung betrifft goniochromatische Kombinationspigmente, bestehend aus mit Metalloxiden beschichteten planaren transluzenten Trägerteilchen, auf denen eine Metallschicht aus der Gruppe Kupfer, Silber, Gold, einem Metall der Platingruppe, Silicium, Chrom, Indium, Zinn, Nickel, Germanium und Aluminium abgeschieden ist. Bei der Herstellung dieser goniochromatischen Pigmente werden auf den mit Metalloxid belegten Trägerteilchen die Metalle chemisch oder physikalisch oder chemisch-physikalisch in einer zumindest partiell optisch halbdurchlässigen Schicht abgeschieden. Die so erhaltenen goniochromatischen Pigmente sind besonders zur Herstellung von Druckfarben geeignet.

## Goniochromatische Pigmente, Verfahren zu deren Herstellung und deren Verwendung zur Herstellung von Druckfarben

Die Erfindung betrifft goniochromatische Pigmente, die besonders zur Herstellung von Sicherheitsfarben, z.B. für Banknoten, und Effektfarben geeignet sind.

Perlglanz- oder Interferenzpigmente auf Basis von mit Metalloxiden, vorzugsweise Titandioxid, beschichteten Glimmerschuppen sind bekannt (W. Bäumer, farbe + lack, 79 (1973), 530-536, 638-645, 747-755). Aufgrund von Reflexion und Interferenz wird bei diesen transparenten, plättchenförmigen Pigmenten ein Teil des einfallenden Lichtes reflektiert und der übrige Teil transmittiert.

Durch entsprechende Steuerung der Dicke des Titandioxidüberzugs auf den Glimmerschuppen werden Pigmente mit unterschiedlichen optischen Eigenschaften hergestellt. Bei sogenannten Perlglanzpigmenten beträgt die Dicke der auf beiden Seiten der Glimmerplättchen aufgebrachten Titandioxidschicht 30 bis 100 nm. Diese Pigmente reflektieren einfallendes Licht sehr stark, das reflektierte Licht ist aber fast farblos (Perlmutteffekt). Bei größeren Schichtdicken des Titandioxids (ca. 100 bis 200 nm) werden durch Interferenz an den Grenzflächen der Schichten Farben im Bereich von blau über grün und gelb bis rot reflektiert und die jeweiligen Komplementärfarben transmittiert. Werden diese Pigmente in einem Bindemittel dispergiert und dergestalt auf einem hellen, vorzugsweise weißen, Untergrund appliziert, daß die Plättchen überwiegend parallel zur Oberfläche der Beschichtung angeordnet sind, erscheint in Abhängigkeit vom Beleuchtungs- und Betrachtungswinkel die reflektierte oder die transmittierte Farbe, d.h. es liegt eine Goniochromazität vor.

Aber auch die mit dickeren Titandioxidschichten überzogenen Glimmerschuppen weisen nur eine geringe Körperfarbe auf, die Farberscheinungen sind deshalb relativ schwach.

Zur Erhöhung der Körperfarbe hat man bereits eine $TiO_2$-Interferenzschicht auf Glimmerschuppen mit einem zusätzlichen Überzug eines absorbierenden Metalloxids, z.B. $Fe_2O_3$ oder $Cr_2O_3$, kombiniert, wodurch gleichzeitig Interferenz- und Absorptionsfarben erzeugt werden. Das Absorptionspigment verändert dabei sowohl die in Reflexion betrachtete Farbe als auch die Durchlaßfarbe, was durch die Eigenfarbe bedingt ist, wodurch insgesamt eine Abnahme des Perlglanzeffektes und eine Veränderung und Schwächung der Goniochromazität bewirkt werden.

Weiterhin ist es bekannt, auf mit Metalloxiden überzogenen Glimmerschuppen Farbpigmente oder Farbstoffe, wie z.B. Eisenblau, abzuscheiden. Durch die Zugabe dieser selektiv lichtabsorbierenden Farbmittel werden die Farben der Interferenzpigmente modifiziert und viele neue und mannigfaltige Effekte ermöglicht.

Gemäß EP-0 227 423 werden auf einer mit einer löslichen Lackschicht versehenen Trägerfolie nacheinander mehrere dünne Schichten eines Metalls und eines dielektrischen Materials im Vakuum durch Bedampfen oder Sputtern in der Weise aufgetragen, daß jeweils die erste und letzte Schicht aus Metall besteht. Anschließend wird durch Auflösen der Lackschicht mit einem geeigneten Lösemittel das aufgebrachte Schichtpaket, bestehend aus alternierenden Schichten von Metall und dielektrischem Material, von der Trägerfolie abgelöst und durch Mahlen bis zu einer gewünschten Teilchenfeinheit zerkleinert. Dieses Verfahren ist außerordentlich aufwendig.

EP-0 313 281 betrifft Pigmente aus einem keramischen schieferartigen Substrat, auf welchem punktförmig Metalle oder Legierungen abgeschieden sind. Auf dem keramischen schieferartigen Substrat können auch anorganische Verbindungen bereits abgeschieden sein. EP-0 313 280 betrifft metallische Anstrichfilme auf Basis der vorgenannten punktförmig mit Metallen belegten schieferartigen keramischen Substrate. Diese Metallfilme sind besonders für Metallicfarben für Autokarosserien geeignet.

Aufgabe der Erfindung ist es, neue goniochromatische Pigmente und darauf aufbetaute Druckfarben auf Basis von mit Metalloxid überzogenen planaren transluzenten Trägerteilchen zur Verfügung zu stellen, die eine deutlich stärkere Körperfarbe aufweisen, eine ausgeprägte Goniochromazität zeigen und gleichzeitig in der Lage sind, stark reflektierende und/oder streuende Untergründe wirksam abzudecken und somit zu einem verminderten Streulichtanteil durch den Untergrund der Beschichtung führen.

Der vorliegenden Erfindung liegt die Entdeckung zugrunde, daß man den gewünschten Effekt durch eine Metallbeschichtung von mit Metalloxiden belegten planaren transluzenten Trägerteilchen erzielen kann.

Die Erfindung betrifft goniochromatische Glanzeffekt-Pigmente auf Basis von mit Metalloxiden belegten planaren transluzenten Trägerteilchen und wenigstens einer zusätzlichen Schicht auf der Metalloxidschicht, und ist dadurch gekennzeichnet, daß die zusätzliche Schicht zumindest partiell optisch halbdurchlässig ist und aus einem Metall der Gruppe Kupfer, Silber, Gold, einem Metall der Platingruppe, Silicium, Chrom, Indium, Zinn, Nickel, Germanium und Aluminium ausgewählt ist.

Bevorzugt werden als planare transluzente Trägerteilchen Glimmerschuppen. Als Glimmerschuppen kommen insbesondere Kaliglimmer (Muskowit) der ungefähren Zusammensetzung $3Al_2O_3.K_2O.6SiO_2.2H_2O$ in Frage, dessen Plättchen einen Durchmesser von vorzugsweise 5 bis 150 μm bei einer Dicke von 100 bis 500 nm haben.

Diese Glimmerschuppen sind beidseitig mit einer transparenten Metalloxidschicht belegt. Die Dicke der Metalloxidschicht liegt im Bereich von 30 bis 200 nm, vorzugsweise im Bereich von 100 bis 200 nm. Je nach gewünschtem Farbeffekt beträgt die Menge an Metalloxid, bezogen auf das Gesamtpigment, 25 bis 70 %, vorzugsweise 30 bis 60 %.

Solche mit einer transparenten Metalloxidschicht belegten Glimmerschuppen sind beispielsweise unter der Bezeichnung Iriodin$^R$-Pigmente im Handel.

Im Handel erhältlich sind auch mit einer transparenten Metalloxidschicht belegte Glimmerschuppen, die zusätzlich Farbpigmente oder Farbstoffe wie Eisenblau auf der Metalloxidschicht aufweisen. Auch solche Produkte sind als Ausgangsprodukte bei der vorliegenden Erfindung geeignet, d.h. daß auf diese Produkte dann ein Metallüberzug zusätzlich aufgebracht wird.

Nachträglich wird die Erfindung unter Verwendung von mit Metalloxid belegten Glimmerschuppen erläutert. Anstelle der mit Metalloxid belegten Glimmerschuppen können aber andere planare transluzente Trägerteilchen aus anorganischen oder organischen Substanzen auf Silikat oder einer anderen Basis dienen.

Auf die mit Metalloxid belegten Glimmerschuppen sind erfindungsgemäß Metalle in dünner Schicht abgeschieden. Je nach Art des abgeschiedenen Metalls beträgt dessen Anteil am Gesamtpigment 0,1 bis 5 Gew.%, vorzugsweise 0,5 bis 3 Gew.%.

Das Metall ist auf den mit Metalloxiden überzogenen Glimmerschuppen im wesentlichen so abgeschieden, daß die Schicht zumindest partiell optisch halbdurchlässig ist. Dabei ist es nicht erforderlich, daß diese zumindest partiell habldurchlässige Schicht das Grundsubstrat (mit Metalloxiden belegte planare transluzente Trägerteilchen) vollständig bedeckt.

Das Metall ist auf den mit Metalloxid überzogenen Glimmerschuppen im wesentlichen in einer sehr dünnen Schicht, bestehend aus einer oder mehreren Atomlagen, in der Form abgeschieden, daß einfallendes Licht die Metallschicht durchdringen kann. Mit steigenden Mengen an Metall, bezogen auf den mit Metalloxid überzogenen Glimmer, werden einzelne Teilchen stärker mit einer Metallschicht überzogen, so daß einfallendes Licht diese Teilchen nicht mehr durchstrahlt. Hierdurch kann der Farbeffekt noch verstärkt werden; insgesamt erscheint dann die Farbe dunkler aber weniger gesättigt.

Die Metalle, die auf den mit Metalloxid belegten planaren transluzenten Trägerteilchen aufgebracht werden, sind vorzugsweise Kupfer, Silber und Gold, wobei Silber und Gold ganz besonders bevorzugt werden. Auch die Metalle der Platingruppe können aufgetragen werden, also Ruthenium, Rhodium, Palladium, Osmium, Iridium und Platin. Weitere Metalle sind Chrom, Indium, Zinn, Nickel, Germanium und Aluminium, sowie auch Silicium. Alle diese Metalle sind für die vorliegende Erfindung geeignet. Die Erfindung wird aber im wesentlichen anhand des bevorzugten Golds nachfolgend beschrieben. Es versteht sich, daß auch mehr als ein Metall gleichzeitig oder nacheinander abgeschieden sein kann. Dabei ist es aber wesentlich, daß insgesamt die abgeschiedene Metallschicht zumindest partiell optisch halbdurchlässig ist.

Die Beschichtung der mit Metalloxid belegten transluzenten Trägerteilchen, insbesondere Glimmerschuppen, mit Metall geschieht auf dem Wege der chemischen und/oder der physikalischen Metallabscheidung.

Zur chemischen Metallabscheidung werden die Glimmerschuppen in einer wäßrigen oder organischen, silberhaltigen Lösung mechanisch in Schwebe gehalten. Die gelösten, solvatisierten Metallionen werden dann durch ein Reduktionsmittel in den atomaren Zustand überführt und überziehen dabei die Glimmerschuppen mit einer dünnen Metallhaut. Als Reduktionsmittel können beispielsweise reduzierende Carbonylverbindungen, wie Aldehyde (Formaldehyd, Acetaldehyd, Benzaldehyd), Ketone (Aceton), Carbonsäuren und deren Salze (Weinsäure, Ascorbinsäure), Reductone (Isoascorbinsäure, Triosereducton, Reduktinsäure) und reduzierende Zucker (Glucose) eingesetzt werden. Aber auch reduzierende Alkohole (Allylalkohol), Polyole und Polyphenole, Sulfite, Hydrogensulfite, Dithionite, Hypophosphite, Hydrazin, Borstickstoffverbindungen, Metallhydride und komplexe Hydride von Aluminium und Bor können verwendet werden.

Außer der chemischen Abscheidung des Metalls ist auch eine physikalische Abscheidung, und zwar insbesondere eine Vakuumaufdampfung, möglich. Weiterhin ist auch eine Kombination von unterschiedlichen Metallabscheidungen möglich, z.B. indem man zunächst eine chemische Abscheidung eines Metalls vornimmt und im Anschluß daran ein weiteres Metall im Vakuum aufdampft. Dabei ist es auch möglich, die Art des Metalls zu verändern, d.h. daß man ein anderes Metall durch Vakuumabscheidung aufträgt als das zuvor durch chemische Abscheidung aufgetragene Metall.

Metalle können auch durch Zersetzung von Organometallverbindungen in der Gasphase auf den mit Metalloxid belegten planaren transluzenten Trägerteilchen abgeschieden werden. Beispielsweise kann man Metallorganyle in der Gasphase auf geeigneten plättchenförmigen Trägerteilchen abscheiden. Durch eine gleichmäßige Fluidisierung der Trägerteilchen erfolgt eine besonders gleichmäßige Beschichtung.

Die erfindungsgemäßen goniochromatischen Pigmente sind ganz besonders zur Herstellung von Druckfarben geeignet. Diese Druckfarben können als Tiefdruckfarbe, als Stichdruckfarbe, als Offsetdruckfarbe oder als Siebdruckfarbe entsprechend formuliert werden. Sie sind ganz besonders als Sicherheitsfarben für Dokumente oder Banknoten und als Effektfarben geeignet.

Wenn nicht anders angegeben, sind die in den Beispielen genannten Teile und Verhältnisse auf die Masse bezogen.

Nachfolgend wird die Erfindung anhand der Abscheidung von metallischem Silber auf mit Titandioxid überzogenen Glimmerschuppen beschrieben, wobei aber Silber durch andere Metalle, wie Gold oder Kupfer, ganz oder teilweise ersetzt werden kann. Ebenso lassen sich die mit Titandioxid überzogenen Glimmerschuppen durch andere planare transluzente Trägerteilchen, die mit geeigneten Metalloxiden überzogen sind, ersetzen, wobei zusätzlich die Metalloxidüberzüge noch mit Farbmitteln belegt sein können.

Beispiel 1

(A) Für eine Beschichtung von 100 g Glimmerschuppen mit 1 Gew.% Silber werden folgende Silber- und Reduktionslösungen hergestellt:

Silberlösung:

1,5 g Silbernitrat werden in 500 ml vollentsalztem Wasser gelöst. Dann gibt man 3 ml konzentrierten Ammoniak hinzu und löst in dieser Lösung 0,6 g NaOH auf.

Reduktionslösung:

2 g Glucose werden in 300 ml vollentsalztem Wasser gelöst, 1 ml verdünnte Salpetersäure zugegeben und mit vollentsalztem Wasser wird auf 500 ml aufgefüllt.

(B) Beschichtung: 100 g Glimmerschuppen werden in 1,5 l vollentsalztem Wasser aufgeschlemmt. Dann gibt man unter Rühren die Silberlösung zu und tropft jetzt die Reduktionslösung rasch zu. Nach kurzer Reaktionszeit (15 Minuten) wird das versilberte Material abgesaugt, mit Wasser und Ethanol gewaschen und bei 60°C getrocknet.

Beispiel 2

Eine Beschichtung von 100 g Glimmerschuppen mit 5 Masse-% Silber wird wie folgt durchgeführt:

(A) Aktivierung:

100 g Glimmerschuppen werden mit 150 ml einer Aktivierungslösung etwa 1/2 Stunde bei Raumtemperatur behandelt. Die Aktivierungslösung enthält in 150 ml Lösung ca. 1,7 g SnCl$_2$.2H$_2$O und 10 ml konzentrierte Salzsäure. Danach wird das Material abgesaugt und mit Wasser gewaschen.

(B) Beschichtung:

Zur Beschichtung werden zunächst eine Silberlösung und eine Reduktionslösung hergestellt.

Silberlösung:

In 100 ml vollentsalztem Wasser werden 12 g Silbernitrat gelöst und mit 15 ml konzentriertem Ammoniak versetzt.

Reduktionslösung:

In 100 ml vollentsalztem Wasser werden ca. 9 g Kaliumnatriumtartrat aufgelöst. Jetzt werden die 100 g aktivierten Glimmerschuppen in 100 ml vollentsalztem Wasser aufgeschlemmt. Silberlösung und Reduktionslösung werden nacheinander zugegeben und die Reaktionsmischung wird unter Rühren auf 50°C erwärmt. Nach etwa 1 Stunde Reaktionszeit läßt man das Material absitzen und filtriert dann ab. Nach dem Waschen mit Wasser und Alkohol werden die silberbeschichteten Glimmerschuppen bei 100°C getrocknet.

Beispiel 3

Silberlösung:

In 250 ml vollentsalztem Wasser werden 2,5 g Silbernitrat aufgelöst und solange mit Ammoniaklösung versetzt bis eine klare, farblose Lösung entsteht.

Reduktionslösung:

In 250 ml vollentsalztem Wasser werden 0,5 g Silbernitrat und 0,4 g Kaliumnatriumtartrat unter Erwärmen bis zur Bildung eines grauen Niederschlages gelöst. Nach Abfiltrieren des Niederschlages wird eine klare, farblose Lösung erhalten. Zur Versilberung werden in einer Lösung aus 50 ml der Silberlösung und 200 ml vollentsalztem Wasser 10 g mit Titandioxid belegte Glimmerschuppen bei 60 bis 70° C suspendiert. Dann wird der pH-Wert der Reaktionsmischung auf 10 mit verdünnter Ammoniaklösung eingestellt. Die Reaktionsmischung wird mit 50 ml der Reduktionslösung versetzt und anschließend wird das Reaktionsgemisch 15 Minuten bei 60 bis 70° C gerührt. Das Reaktionsgemisch wird filtriert, der Filterrückstand mit Wasser, Ethanol und Aceton in der genannten Reihenfolge gewaschen und an der Luft getrocknet.

Beispiel 4

Aufbringen von Metallschichten durch Vakuumbeschichtung:

In einer Hochfrequenzzerstäubungsanlage mit Magnetronkathode werden 20 g mit Titandioxid beschichtete Glimmerteilchen auf den Substratteller geschichtet. Die vom Pulver bedeckte Fläche hat einen Durchmesser von 100 mm. Nach dem Abpumpen der Beschichtungskammer auf einen Enddruck von $10^{-4}$ Pa läßt man Argon bis zu einem Druck von $7.10^{-1}$ Pa einströmen. Zunächst wird für 10 Minuten die Oberfläche des Al-Targets (Reinheit 99,9 %; Durchmesser 150 mm; Dicke 6 mm) durch Ionenbeschuß gereinigt, wobei eine Blende das Pulver abdeckt.

Anschließend findet bei herausgeschwenkter Blende die Beschichtung des Pulvers mit Silber statt und zwar unter folgenden Bedingungen: Arbeitsdruck $7.10^{-1}$ Pa; Leistungsdichte am Target: 9 W/cm²; Abstand Target-Substratteller: 55 mm; Dauer: 10 Minuten, in Abhängigkeit von der gewünschten Schichtdicke.

Beispiel 5

Aufbringen von Metallschichten durch Zerstäuben von Metallen:

In einer Zerstäubungseinrichtung für kleine Proben wurden 0,2 g mit Titandioxid belegte Glimmerteilchen von einer Seite bei einem Vakuum von 0,01 bis 0,001 Torr (1 Torr = 133,3 Pa) mit einem der in der Beschreibung vorgenannten Metalle besputtert. Durch mehrmaliges Wenden der mit Titandioxid beschichteten Glimmerteilchen auf dem Probenträger (Durchmesser 20 mm) wurden die mit Titandioxid belegten Glimmerteilchen gleichmäßig mit einer Metallschicht belegt. Das so hergestellte Pigment weist eine deutliche Goniochromazität auf.

Beispiel 6

In 200 ml einer wäßrigen, 10 %igen Glucoselösung wurden 10 g Iriodin®-Pigment suspendiert. Anschließend wurde die Lösung mit konzentriertem Ammoniak auf den pH-Wert 10 bis 12 eingestellt und auf 60 bis 70° C erwärmt. Die Reaktionsmischung wurde mit 140 ml Gold(III)chloridlösung (800 mg Goldchlorid) versetzt. Nach 30 Minuten wurde eine deutliche Farbvertiefung beobachtet. Das Pigment wurde filtriert und mit Wasser, Ethanol und Aceton nacheinander gewaschen und an der Luft getrocknet.

Beispiel 7

Tiefdruckfarbe:

In 42 Teile eines Bindemittelsystems, bestehend z.B. aus Nitrocellulose, gegebenenfalls einem Kombinationsharz, Weichmacher, Ethanol, Ethylacetat, Netzmitteln und Antiabsetzmitteln, werden mit einem geeigneten Rühraggregat 25 Teile der nach einem der Beispiele 1 bis 6 erhaltenen Pigmente während 20 Minuten eingerührt. Anschließend werden unter Rühren 9 Teile einer Gleitmittelkomposition zugesetzt, in der auch ein Anteil des oben erwähnten Bindemittelsystems enthalten sein kann. Zur Ergänzung eingetretener Lösemittelverluste werden abschließend 14 Teile der oben erwähnten Lösemittel Ethanol/Ethylacetat zugefügt.

Beispiel 8

Tiefdruckfarbe:

In 65 Teile eines Bindemittelsystems, bestehend aus einem Acrylat-Copolymerisat, Antiabsetzmitteln, Gleitmittel und Toluol werden unter Rühren 25 Teile der nach einem der Beispiele 1 bis 6 erhaltenen Pigmente während 20 Minuten eingerührt. Lösemittelverluste werden durch Zusatz von 10 Teilen Toluol ausgeglichen.

Beispiel 9

Wasserbasiertes Farbsystem für Tiefdruck, Flexodruck, Lackierwerke:

In 75 Teile eines Bindemittelsystems, bestehend aus Styrol-Acrylat-Copolymerisat-Dispersionen, Styrol-Acrylat-Copolymerisat-Harzlösungen, Wasser, Aminen, Ammoniak, Hilfsmitteln und gegebenenfalls Alkoholen, werden 25 Teile der nach einem der Beispiele 1 bis 6 hergestellten Pigmente unter Rühren eingemischt.

Beispiel 10

Stichdruckfarbe:

In 45 Teile eines Bindemittelsystems, bestehend aus Alkydharzen, modifizierten Kolophoniumharzen, pflanzlichen und mineralischen Ölen, in das zuvor 15 Teile eines anorganischen Füllstoffs eindispergiert wurden, werden zusammen mit 10 Teilen Hilfsmitteln 30 Teile der nach einem der Beispiele 1 bis 6 hergestellten Pigmente unter Rühren eingemischt.

Beispiel 11

Offsetfarbe:

In 75 Teile eines Bindemittelsystems, bestehend aus Alkydharzen, modifizierten Kolophoniumharzen, pflanzlichen und mineralischen Ölen, werden zusammen mit 5 Teilen Hilfsmitteln 20 Teile der nach einem der Beispiele 1 bis 6 hergestellten Pigmente unter Rühren eingemischt.

Beispiel 12

Siebdruckfarbe:

In 75 Teile eines Bindemittelsystems, bestehend aus Acrylat- und PVC-Copolymerisaten sowie Lösemitteln, wie Methoxypropylacetat, Glykolsäurebutylester und Cyclohexanon, werden 25 Teile der nach einem der Beispiele 1 bis 6 hergestellten Pigmente unter Rühren eingemischt.

**Ansprüche**

1. Goniochromatische Glanzeffekt-Pigmente auf Basis von mit Metalloxiden belegten planaren transluzenten Trägerteilchen und wenigstens einer zusätzlichen Schicht auf der Metalloxidschicht, dadurch **gekennzeichnet,** daß die zusätzliche Schicht zumindest partiell optisch halbdurchlässig ist und aus einem Metall der Gruppe Kupfer, Silber, Gold, einem Metall der Platingruppe, Silicium, Chrom, Indium, Zinn, Nickel, Germanium und Aluminium ausgewählt ist.

2. Kombinationspigment gemäß Anspruch 1, dadurch **gekennzeichnet,** daß die planaren transluzenten Trägerteilchen Glimmerschuppen sind.

3. Kombinationspigment gemäß einem der vorhergehenden Ansprüche, dadurch **gekennzeichnet,** daß das abgeschiedene Metall einen Anteil am Gesamtpigment von 0,1 bis 5 Masse-% hat.

4. Kombinationspigment gemäß Anspruch 3, dadurch **gekennzeichnet,** daß der Anteil des Metalls am Gesamtpigment 0,5 bis 3 Masse-% beträgt.

5. Verfahren zur Herstellung eines Kombinationspigmentes gemäß Anspruch 1, dadurch **gekennzeichnet,** daß man auf die mit Metalloxid belegten planaren transluzenten Trägerteilchen, die ggf. noch mit einem weiteren Farbpigment belegt sind, ein Metalloxid der Gruppe Kupfer, Silber, Gold, einem Metall der Platingruppe, Silicium, Chrom, Indium, Zinn, Nickel, Germanium und Aluminium abscheidet.

6. Verfahren gemäß Anspruch 5, dadurch **gekennzeichnet,** daß die Abscheidung des Metalls chemisch vorgenommen wird.

7. Verfahren gemäß Anspruch 5, dadurch **gekennzeichnet,** daß die Abscheidung des Metalls durch Vakuumbeschichtung erfolgt.

8. Verfahren gemäß Anspruch 5, dadurch **gekennzeichnet,** daß man die Abscheidung des Metalls durch Zersetzen von Metallorganylen unter Fluidisierung der Trägerteilchen vornimmt.

9. Verwendung von Kombinationspigmenten gemäß Ansprüchen 1 bis 5 zur Herstellung von Druckfarben.

10. Verwendung gemäß Anspruch 9 zur Herstellung von Sicherheits- und Effektfarben.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CHEMICAL ABSTRACTS, Band 109, Nr. 6, 8. August 1988, Seite 89, Zusammenfassung Nr. 39498n, Columbus, Ohio, US; & JP-A-63 43 962 (SHISEIDO CO., LTD) 25-02-1988 * Zusammenfassung * --- | 1,2,5 | C 09 C 1/00 C 09 D 11/02 B 41 M 3/14 |
| X | CHEMICAL ABSTRACTS, Band 98, Nr. 16, 18. April 1983, Seite 82, Zusammenfassung Nr. 127778p, Columbus, Ohio, US; & JP-A-57 161 055 (TOPPAN PRINTING CO., LTD) 04-10-1982 * Zusammenfassung * --- | 1,2,5,6 ,9,10 | |
| P,X | CHEMICAL ABSTRACTS, Band 109, Nr. 26, 26. Dezember 1988, Seite 95, Zusammenfassung Nr. 232852b, Columbus, Ohio, US; & JP-A-63 197 638 (ADACHI SHIN SANGYO K.K.) 16-08-1988 * @Zusammenfassung * --- | 1,5,6 | |
| A | US-A-3 053 683 (S. YOLLES) --- | | RECHERCHIERTE SACHGEBIETE (Int. Cl.5) |
| A | US-A-3 536 520 (W.J. MARSHALL et al.) --- | | C 09 C |
| A | CHEMICAL ABSTRACTS, Band 84, Nr. 8, 23. Februar 1976, Seite 115, Zusammenfassung Nr. 46195e, Columbus, Ohio, US; & JP-A-75 19 127 (NIHON KOKEN KOGYO K.K.) 04-07-1975 --- | | |
| A | CHEMICAL ABSTRACTS, Band 94, Nr. 20, 18. Mai 1981, Seite 88, Zusammenfassung Nr. 158443x, Columbus, Ohio, US; & JP-A-80 160 061 (SHOWA HIGHPOLYMER CO., LTD) 12-12-1980 --- -/- | | |

Der vorliegende Recherchenbericht wurde für alle Patentansprüche erstellt

| Recherchenort | Abschlußdatum der Recherche | Prüfer |
|---|---|---|
| DEN HAAG | 06-11-1989 | VAN BELLINGEN I.C.A. |

Europäisches
Patentamt

Nummer der Anmeldung

EP 89 11 3242

**EUROPÄISCHER RECHERCHENBERICHT**

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| A | US-A-3 438 796 (A.R. HANKE)<br>----- | . | |
| | | | RECHERCHIERTE SACHGEBIETE (Int. Cl.5) |

Der vorliegende Recherchenbericht wurde für alle Patentansprüche erstellt

| Recherchenort | Abschlußdatum der Recherche | Prüfer |
|---|---|---|
| DEN HAAG | 06-11-1989 | VAN BELLINGEN I.C.A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes
    Dokument

EPO FORM 1503 03.82 (P0403)